# EUROPEAN PATENT APPLICATION

(11) **EP 2 803 706 A1**
(43) Date of publication of application: **19.11.2014**
(21) Application number: 12864897.9
(22) Date of filing: 11.12.2012
(51) Int. Cl.: C09D 127/12, C09D 133/04, C09J 7/02, C08J 5/18

(54) **HARD COATING COMPOSITION AND DECORATIVE FILM WITH REDUCED YELLOWING COMPRISING SAME**

(30) Priority: 11.01.2012 KR 20120003306
(71) Applicant: LG Hausys, Ltd., Seoul 150-721 (KR)
(72) Inventor: KIM, Jong Bum, Cheongju-si Chungcheongbuk-do 361-856 (KR); KIM, Jin Woo, Chungcheongbuk-do 361-230 (KR); KIM, Won-Kook, Daejeon 305-759 (KR)
(74) Representative: vP-IP von Puttkamer Berngruber Loth Spuhler
(86) International application number: PCT/KR2012/010754
(87) International publication number: WO 2013/105742

(57) **Abstract**

The present invention discloses a hard coating composition and a manufacturing method thereof comprising a UV curable resin having a (meth)acryloyl functional group and a fluororesin.

Also, the present invention provides a decorative film comprising a hard coating layer, a print layer, an adhesive layer and a manufacturing method thereof, wherein the hard coating layer is consisted of the hard coating composition comprising a UV curable resin having a (meth)acryloyl functional group and a fluororesin.

## Description

### [Technical Field]

The present invention relates to a decorative film for reducing yellowing of a surface of an injection molding product, and more particularly, a hard coating composition reducing yellowing from UV and a decorative film comprising a hard coating layer comprising the same and a manufacturing method thereof.

### [Background Art]

Generally UV absorbents or UV stabilizers are introduced on hard coating layers to prevent yellowing from UV, and in this case, compatibility with hard coating solutions is poor, and thus there are cases where gelling occurs or effects are inadequate. And as it goes through the UV curing after an injection molding, and there are possibilities of curing densities of the hard coating layers decreasing from forming of radicals being interrupted from the UV absorbents or the UV stabilizers during the UV curing. Also, since it reacts to a UV of specific wavelengths in accordance with type, there are disadvantages of having to use by mixing various types.

Also, Korea publication No. 10-2011-0069436 also comprises a composition for a coating composed of a mixture of a radiation curable resin and a thermal curable resin, and thus hard coating layers do not break or peel off, and only a molding film having excellent physical properties required in injection molding products such as surface hardness was disclosed, and did not provide effects of reducing yellowing of hard coating layers from UV after the injection molding described above.

### [Disclosure]

### [Technical Problem]

An objective of the present invention is to provide a hard coating composition for reducing yellowing from UV after injection molding and a manufacturing method thereof.

Another objective of the present invention is to provide a decorative film comprising a hard coating layer composed of the hard coating composition and a manufacturing method thereof.

### [Technical Solution]

To achieve one of the described objective, the present invention provides a hard coating composition comprising a UV curable resin having a (meth)acryloyl functional group and a fluororesin.

Meanwhile, the hard coating composition may be prepared with a method comprising preparing a (meth)acrylate copolymer having an epoxy functional group; preparing a UV curable resin having an acryloyl functional group by additional reaction of a (meth)acrylic acid monomer with the (meth)acrylate copolymer; preparing the proposed composition by blending the UV curable resin and the fluororesin.

To achieve another described objective, the present invention provides a decorative film and a manufacturing method thereof, with respect to a decorative film comprising a hard coating layer, a printed layer, and an adhesive layer, wherein the hard coating layer is consisted of the hard coating composition comprising a UV curable resin having a (meth)acryloyl and a fluororesin.

### [Advantageous Effects]

A hard coating layer with a fluororesin comprised in a decorative film in accordance with the present invention, by blocking UV after an injection molding, has advantages of being able to prevent yellowing from UV after the injection molding.

Also, the fluororesin is arranged downward when forming the hard coating layer because of its high specific gravity, but it has excellent effects for reducing yellowing even when applying small amounts because it is arranged to a surface of an injection molding product after transcription.

### [Description of Drawings]

FIG. 1 is a drawing showing an outline of a decorative film structure in accordance with an embodiment of the present invention.
FIG. 2 is a drawing showing an outline of a decorative film structure in accordance with another embodiment of the present invention.
FIG. 3 is a drawing showing an outline of a decorative film structure after transcription in accordance with another embodiment of the present invention

### [Best Mode]

Advantages and features of the present invention, and method for achieving thereof will be apparent with reference to the following examples. But, it should be understood that the present invention is not limited to the following examples and may be embodied in different ways, and that the examples are given to provide complete disclosure of the invention and to provide thorough understanding of the invention to those skilled in the art, and the scope of the invention is limited only by the accompanying claims and equivalents thereof. Like components will be denoted by like reference numerals throughout the specification.

Hereinafter, a hard coating composition and a decorative film having reduced yellowing comprising the same are described in detail.

A hard coating composition in accordance with the present invention comprises a UV curable resin having a (meth)acryloyl functional group and a fluororesin.

The UV curable resin having the (meth)acryloyl functional group enables the hard coating composition in accordance with the present invention to be cured by UV. In the present invention, the UV curing may be seen as a curing reaction being carried out by a reaction of the (meth)acryloyl functional group comprised in the resin during UV irradiation.

For the UV curable resin, it is preferable for an equivalent weight of epoxy to be 200 ~ 20,000 g/eq, and an equivalent weight of (meth)acryloyl to be 100 ~ 1,000 g/eq. When the equivalent weight of epoxy and the equivalent weight of (meth)acryloyl of the UV curable resin falls within each of the ranges, thermal curing efficiency is excellent, viscosity, etc. is adequately suppressed after the thermal curing, and chemical resistance, abrasion resistance after the UV curing, etc. is excellent.

Also, it is preferable for a weight-average molecular weight (Mw) of the UV curable resin to be 5,000 ~ 100,000. When the weight-average molecular weight of the UV curable resin is less than 5,000, scratch resistance, abrasion resistance, etc. may be insufficient due to the lack of cohesiveness of polymers. On the contrary, when the weight-average molecular weight of the UV curable resin exceeds 100,000, it shows gelling behaviours and thus copolymer self reaction becoming difficult.

The hard coating composition comprises a fluororesin, and the fluororesin is a plastic containing fluorine and has excellent chemical properties and a variety of types. The fluororesin usable in the present invention is not specifically limited, but for example, polytetrafluoroethylene (PTFE), polychlorotrifluoroethylene (PCTFE), polyvinylidenefluoride (PVDF), and polyvinylfluoride (PVF) may be used, and preferably, polytetrafluoroethylene is used.

The polytetrafluoroethylene is a representative fluororesin with the highest demand and is a crystalline resin known as a product name of Teflon, and has thermal resistance of withstanding long periods of uses in 260°C, and chemical resistance, electrical insulation, non-adhesive, low friction coefficients, flame retardant, etc. are unique and is harmless to human bodies.

The fluororesin is a particle blocking UV. A UV curing method is introduced because of various advantages of productivity, high hardness, surface gloss, electrical insulation, etc. compared to thermal drying methods, but a coating layer comprising a transparent resin may become light yellow or light brown in color, and this is called yellowing. Here, occurence of yellowing by UV after an injection molding may be suppressed by a hard coating composition comprising the fluororesin, which is a UV blocking particle.

Since UV blocking particles composed of the fluororesin has a high specific weight of about 2.2, it is arranged downward when forming the hard coating layer, but it has excellent effects for reducing yellowing by blocking UV even when applying small amounts because it is arranged to a surface of an injection molding product after transcription.

Also, it is preferable for the fluororesin to be comprised 0.5~10 parts by weight to 100 parts by weight based on the UV curable resin. When the amount of the fluororesin is less than 0.5 parts by weight, the amount of the fluororesin in the hard coating composition is too less and UV blocking effect is inadequate, and thus effect of reducing yellowing by UV after injection molding drops, and when exceeding 10 parts by weight, the fluororesin particles cause haze, and transparency of a hard coating layer comprising the hard coating composition drops greatly and there are concerns of reactivity during the UV curing of a finished product decreasing.

It is preferable for the present invention to have a particle diameter of the fluororesin of 0.2~10µm. When the particle diameter of the fluororesin is less than 0.2 µm, the particle size is too small and the UV blocking effect is inadequate, and thus the effect of reducing yellowing drops, and when exceeding 10 µm, the UV blocking particles composed of the fluororesin is observed by the naked eye and have concerns of transparency of the hard coating composition dropping greatly, and when forming a coating layer comprising the hard coating composition, curvatures occurs on the hard coating layer surface by the fluororesin, which blocks UV, and smoothness may worsen.

A hard coating composition in accordance with the present invention may further comprise a solvent dispersing the UV curable resin and UV blocking particles, a UV initiator, and an antioxidant. The UV initiator may use compounds such as benzoin, hydroxyketone, aminoketone, phosphine oxide, etc. and the antioxidant may use phenolic antioxidants, phosphorus antioxidants, chelate antioxidants, etc.

Also, the hard coating composition in accordance with the present invention, according to needs, may comprise at least one of lubricants, UV absorbents, catalysts for thermal curing, fillers, isocyanate compounds, etc. The hard coating composition in accordance with the present invention may be prepared by, after preparing a (meth)acrylates copolymer having an epoxy functional group, preparing a UV curable resin having an acryloyl functional group by additional reaction of a (meth)acrylic acid monomer with the

(meth)acrylates copolymer, and blending a fluororesin with the prepared UV curable resin.

Here, the (meth)acrylates copolymer having the epoxy functional group may be prepared by a copolymerization of methly(meth)acrylate and glycidyl(meth)acrylate. The copolymerization of methly(meth)acrylate and glycidyl(meth)acrylate may apply various methods of solution polymerization, photopolymerization, bulk polymerization, etc.

Also, the amount of the (meth)acrylic acid monomer, etc. used may be decided in accordance with an equivalent weight of the (meth)acryloyl of the UV curable resin. Also, when preparing the composition, a UV curing agent, an antioxidant, and other additives may be added.

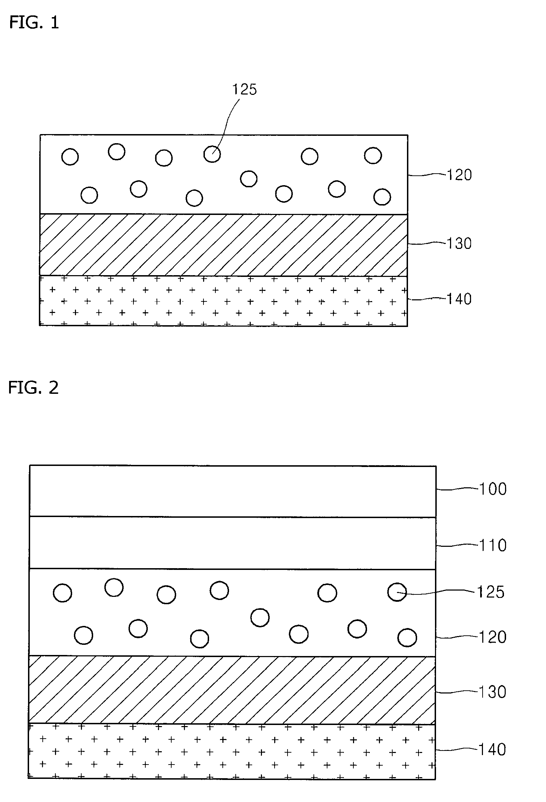

FIG. 1 is a drawing showing an outline of a decorative film structure in accordance with an embodiment of the present invention.

Here, the decorative film describes a film able to form a hard coating layer on a surface of a molding product by various methods of transcription methods, simultaneous injection transcription methods, insert methods, adhesion, etc. Referring to FIG. 1, the illustrated decorative film comprises a hard coating layer (120), a printed layer (130), and an adhesive layer (140). The present invention is formed with the hard coating layer (120) comprising a UV curable resin having a (meth)acryloyl functional group and a fluororesin.

The hard coating layer (120) is formed with a purpose of preventing scratch occurring on the printed layer (140) described below. As it comprises the hard coating composition in accordance with the present invention, the hard coating composition comprising the UV curable resin having a acryloyl functional group and a fluororesin may be formed by treating for 30 seconds to 2 minutes at temperatures of 100 to 170°C.

Here, the hard coating layer (120) may be formed in a thickness of 3 to 10µm. When the thickness of the hard coating layer is formed less than 3 µm, surface properties, that is, hardness, abrasion resistance, etc. of the hard coating layer may decline. On the contrary, when the thickness of the hard coating layer is formed exceeding 10 µm, physical properties of the hard coating layer becomes brittle and not only cracks may occur during molding but also manufacturing costs may increase excessively without anymore increase in effects.

The adhesive layer (140) is formed on the hard coating layer (120) and allows a decorative film to adhere to a molding product. To form the adhesive layer (140), a polyacrylic based resin, a polystyrene based resin, a polyamide based, a chlorinated polyolefin based resin, a chlorinated ethylenevinylacetate copolymer based resin, a rubber based resin, etc. may be used.

There are no limits on the thickness of the adhesive layer (130) when within a range to achieve the objective of the present invention, and to protect the adhesive layer (130), a protective film (not illustrated) may be formed on the adhesive layer (130).

The printed layer (130) may be formed by using any one of a gravure printing or a flexographic printing. Since the printed layer (140) has same or different designs with each other, portraits, patterns, various colors, various designs, etc. may be freely realized in a desired shape.

FIG. 2 is a drawing showing an outline of a decorative film structure in accordance with another embodiment of the present invention.

Referring to FIG. 2, the illustrated decorative film comprises a substrate layer (100), a release layer (110), a hard coating layer (120), a printed layer (130), and an adhesive layer (140). The substrate or the release layer may be comprised on bottom of the hard coating layer (120) being consisted of the hard coating composition comprising a UV curable resin having an (meth)acryloyl functional group of the decorative film of the present invention and a fluororesin.

The substrate layer (100), as a whole, functions as maintaining the shape of the decorative film. It is preferable for the substrate layer to use a thermal resistant synthetic resin, and may comprise one or two or more synthetic resin selected from a polyester resin, a polypropylene resin, a polyamide resin, a polyethylene resin, and a triacetate resin. Especially, it is preferable to prepare the substrate layer using the polyethylene terephthalate (PET) or the polyethylene terephthalate glycol (PETG) resin among the polyester resin. Since the polyethylene terephthalate or the polyethylene terephthalate glycol has a more excellent elongation than normal substrate materials, moldability of the decorative film in accordance with the present invention may be maximized.

Also, it is preferable for the thickness of the substrate layer (100) to be 20 to 200 µm. When the thickness of the substrate (100) is less than 20 µm, contraction ratio of films occurs to a great degree and operation is difficult, and when exceeding 200 µm, there may be difficulties of molding culvatures during injection molding.

To form the release layer (110), release agents of an epoxy based, an epoxy-melamine based, an amino alkyd based, an acryl based, a melamine based, a silicon based, a fluorine based, a cellulose based, an urea resin based, a polyolefine based, a paraffin based, etc. may be used.

This release layer (100) may be formed in a thickness of 0.1 to 5 µm. When the thickness of the release layer is formed less than 0.1 µm, it is difficult to secure release properties, on the other hand, when the thickness of the release layer is formed exceeding 5 µm, cracks may be caused in the release layer during molding.

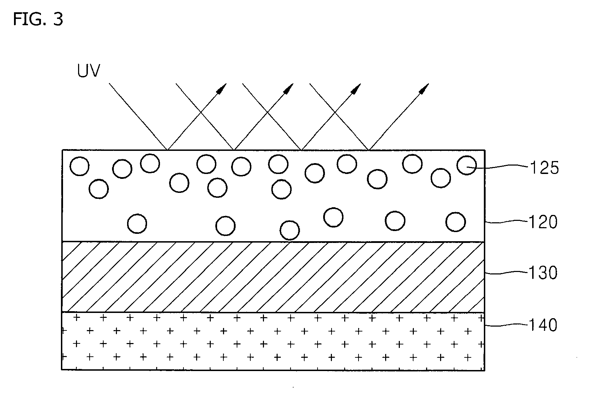

FIG. 3 is a drawing illustrating an outline of a decorative film structure after transcription in accordance with another embodiment of the present invention, and by dividing the hard coating layer of the present invention in 1/2, the part over 1/2, that is, the part exposed to an injection molding product is called an upper part of the hard coating layer, and the opposite part below 1/2 a bottom part of the hard coating layer, and the bottom part of the hard coating layer may come into contact with the printed layer and the adhesive layer, etc. not the injection molding product. Here, the present invention has a distribution density of the fluororesin of the upper part of the hard coating layer higher than the bottom part of the hard coating layer.

More specifically, the hard coating layer of the present invention is consisted of the hard coating composition comprising a UV curable resin having an acryloyl functional group and a fluororesin, and the fluororesin is arranged to a bottom part of the hard coating layer during forming the hard coating layer, but the distribution density becomes higher in the upper part of the hard coating layer after transcription, and thus, since the fluororesin distribution is arranged inclining to the surface of the injection molding product, UV is blocked and yellowing may be suppressed. In addition, due to distribution density of the fluororesin after transcription, effects of suppressing yellowing is excellent even when applying a small amount of the fluororesin.

The decorative film of the present invention described above may be made with an inmold transcription film. The inmold transcription film has an important effect on the molding material quality in an inmold injection process, and normally comprises a base film, a protection layer laminated on top of this, and a printed layer having a certain design and an adhesive layer. But, when using an interior film of the present invention described before as the inmold transcription film, it comprises the hard coating layer is consisted of the hard coating composition comprising a fluororesin, and compared to prior inmold transcription films, an excellent quality injection molding product may be prepared by being able to reduce yellowing by UV, and may reduce production of defective products from discoloration.

A manufacturing method of the decorative film of the present invention comprises forming a release layer on top of a substrate; forming a hard coating layer on top of the release layer; forming a printed layer on top of the hard coating layer; and forming an adhesive layer on top of the printed layer, and here, the hard coating layer is formed from the hard coating composition comprising a UV curable resin having an acryloyl functional group and a fluororesin. In the forming the hard coating layer on top of the release layer step, the distribution density of the fluororesin is arranged to the bottom part due to the large specific weight of the fluororesin, but after transcription, the distribution density of the fluororesin becomes higher in the upper part of the hard coating layer exposed to the injection molding product than the bottom part of the hard coating layer, and thus yellowing by UV may be reduced. Hereinafter, the characteristics of the sheet for forming the hard coating in accordance with the present invention are examined through a preferred example of the present invention. But, the following examples are provided as preferred examples of the present invention and the scope of the present invention is not limited to these. Contents not presented here may be inferred by those skilled in the arts and its description is skipped.

### 1. Manufacturing a decorative film

### Example 1

In a reactor equipped with an agitator, a cooling tube, a load lot, and a nitrogen introducer, 110g of glycidyl methacrylate (GMA), 20g of methyl methacrylate (MMA), 60g of styrene, 1500g of butyl acetate (BA) and 2.5g of 2,2'-azobisisobutyronitrile (AIBN) are added. And then, under a stream of nitrogen, and after raising the temperature of inside the reactor to about 65°C for a span of about 1 hour, it was heated for about 9 hours. And then, a composition comprising 430g of GMA, 120g of MMA, 250g of styrene, 5g of lauryl mercaptan and 10g of AIBN is loaded in a span of about 2 hours to the reactor under the stream of nitrogen using the load lot, and was heated for about 3 hours at a same temperature. And then, the temperature was adjusted to about 105°C, and after the nitrogen introducer is exchanged to an air introducer, 370g of acrylic acid (AA), 0.5g of p-methoxyphenol and 0.4g of dimethylaminopyridine (DMAP) was added and mixed, and then maintained at 105 °C under air bubbling. After heating for 15 hours at a same temperature, 0.5g of p-methoxyphenol was added, and after cooling, methylethylketone is applied so that a non-volatile matter becomes 30%, and thus a UV curable resin having a acryloyl functional group was prepared. As a result of measuring with a chemical titration with respect to the prepared UV curable resin, the equivalent weight of epoxy was 6,600g/eq, the equivalent weight of acryloyl was 349g/eq, and the standard polystyrene conversion weight average molecular weight measured by GPC was 60,000.

Next, a hard coating composition comprising 20g of polytetrafluoroethylene with a particle diameter of 4µm corresponding to 1000g of the prepared UV curable resin was prepared by mixing 80g of a UV initiator, 10g of an antioxidant, 200g of nanosilica, and 700g of methylethylketone.

And then, a release layer was formed by coating a melamine release agent in a thickness of about 1µm with a gravure coating method on one side of a PET film with a thickness of 50µm. And then, the prepared hard coating composition was coated in a thickness of about 6 µm by a micro gravure coating method on a release layer. And then, a coated coating solution was heated for 30 seconds at a temperature of 150 °C, and a decorative film was prepared by forming a hard coating layer being consisted of the hard coating composition.

### Example 2

, A decorative film was prepared in a same manneras in Example 1, except that polychlorotrifluoroethylene was used instead of polytetrafluoroethylene

### Comparative example 1

A decorative film was prepared in a same manner as in Example 1, except that polytetrafluoroethylene was excluded.

### Comparative example 2

A decorative film was prepared in a samemanner as in Example 1, except that a zinc oxide powder was used instead of polytetrafluoroethylene,

### 2. Physical property evaluation

For a physical properties evaluation, the printed layer and the adhesive layer was coated and sufficiently aged to bestow decorative effects on the decorative film of Examples 1 and 2 and Comparative examples 1 and 2. And then, each sheet was used and injection molded, and then passed though a UV curing device and specimens for physical properties evaluation were prepared.

To evaluate weather resistance, discoloration, decolorization, gloss, and change in surface was observed by the naked eye by changing temperatures and humidity while irradiating UV for 1,000 hours in a WOM (Weathe-O-Meter) tester.

Also, each of the prepared specimens were put in a QUV tester and were exposed for 100 hours in irradiance of 0.72W/m2, in a condition of a temperature of 70 °C using a UV lamp with an average wavelength of 313nm, and then a color difference (ΔE) of initial and after UV exposure was measured using a color meter.

**[Table 1]**

| | Example 1 | Example 2 | Comparative example 1 | Comparative example 2 |
|---|---|---|---|---|
| Weather resistance | ⊚ | ○ | X | Δ |
| ΔE | 1.3 | 1.6 | 2.9 | 2.4 |
| ⊚ : Excellent, ○ : Good, Δ : Average, X : Poor | | | | |

Referring to Table 1, the weather resistance indicates properties of withstanding changes in outside environment, and the weather resistance for the cases of Examples 1 and 2 were measured more excellent than Comparative examples 1 and 2, and thus UV blocking effect being excellent was observed.

Meanwhile, the gloss and color change was smaller as ΔE was smaller, and it may be obserced that yellowing also reduces as ΔE is smaller. Identical to the results of the weather resistance, it was observed that in the case of Examples 1 and 2, it had smaller changes to a yellow color by UV light compared to Comparative examples 1 and 2.

Also, in the case of using the hard coating composition comprising polychlorotrifluoroethylene, weather resistance was also good and ΔE was on the small side, but in the case of comprising polytetrafluoroethylene, it showed superior excellence with respect to weather resistance and ΔE.

## Claims

1. A hard coating composition comprising a UV curable resin having a (meth)acryloyl functional group and a fluororesin.

2. A hard coating composition according to claim 1, wherein the fluororesin is a particle blocking ultraviolet rays.

3. A hard coating composition according to claim 1, wherein the fluororesin is at least one selected from a group of polytetrafluoroethylene, polychlorotrifluoroethylene, polyvinylidenefluoride, and polyvinylfluoride.

4. A hard coating composition according to claim 1, wherein the fluororesin is comprised 0.5 to 10 parts by weight to 100 parts by weight based on the UV curable resin.

5. A hard coating composition according to claim 1, wherein the fluororesin has a particle diameter of 0.2 to 10µm.

6. A manufacturing method of a hard coating composition comprising,
preparing a (meth)acrylate copolymer having an epoxy functional group;
preparing a UV curable resin having an acryloyl functional group by additional reaction of a (meth)acrylic acid monomer with the (meth)acrylate copolymer;
and
blending the UV curable resin and the fluororesin.

7. A preparation method of a hard coating composition according to claim 6, wherein the (meth)acrylate copolymer is prepared by a copolymerization of methly(meth)acrylate and glycidyl(meth)acrylate.

8. A decorative film comprising a hard coating layer, a printed layer, and an adhesive layer, wherein the hard coating layer is consisted of a hard coating composition comprising a UV curable resin having a (meth)acryloyl and a fluororesin.

9. A decorative film according to claim 8, wherein a substrate and a release layer is comprised under the hard coating layer.

10. A decorative film according to claim 8, wherein a distribution density of a fluororesin on top of the hard coating layer is higher than bottom of the hard coating layer.

11. A decorative film according to claim 8, wherein the decorative film is an inmold transcription film.

12. A manufacturing method of a decorative film comprising
forming a release layer on top of a substrate;
forming a hard coating layer on top of the release layer;
forming a printed layer on top of the hard coating layer; and
forming an adhesive layer on top of the printed layer, wherein the hard coating layer is formed from a hard coating composition comprising a UV curable resin having an acryloyl functional group and a fluororesin.
